Europäisches Patentamt

European Patent Office

Office européen des brevets

(19)

(11) Veröffentlichungsnummer: **0 229 368**
**B1**

# (12) EUROPÄISCHE PATENTSCHRIFT

(45) Veröffentlichungstag der Patentschrift:
14.11.90

(51) Int. Cl.⁵: **C08F 10/02, C08F 2/34**

(21) Anmeldenummer: **86117827.5**

(22) Anmeldetag: **20.12.86**

(54) **Einsatz von Antistatika zur Vermeidung von Belagbildung bei der Herstellung von Ethylenpolymerisaten in Gasphasenreakatoren.**

(30) Priorität: **11.01.86 DE 3600610**

(43) Veröffentlichungstag der Anmeldung:
**22.07.87 Patentblatt 87/30**

(45) Bekanntmachung des Hinweises auf die Patenterteilung:
**14.11.90 Patentblatt 90/46**

(84) Benannte Vertragsstaaten:
**AT BE DE FR GB IT NL SE**

(56) Entgegenhaltungen:
**EP-A- 0 107 127**
**EP-A- 0 110 087**
**US-A- 4 220 580**

**CHEMICAL ABSTRACTS, Band 94, 1981, Columbus, OH (US); S. 17, Nr. 192929v**

(73) Patentinhaber: **BASF Aktiengesellschaft,
Carl-Bosch-Strasse 38, D-6700 Ludwigshafen(DE)**

(72) Erfinder: **Bullack, Horst, Karlsbaderstr. 14,
D-5047 Wesseling(DE)**
Erfinder: **Oeder, Dieter, Dr., Antoniusstr. 1,
D-5047 Wesseling(DE)**
Erfinder: **Bell, Hans, Kastanienweg 9,
D-5047 Wesseling(DE)**

## Beschreibung

Die Erfindung betrifft ein Verfahren zur Herstellung von Ethylenpolymerisaten durch Homopolymerisation von Ethylen oder Copolymerisation von Ethylen mit Ethylen copolymerisierbaren Verbindungen durch kontinuierliches Einführen der Monomeren in ein Polymerisationssystem, in dem eine Temperatur zwischen 60 und 125°C und ein Druck zwischen 5 und 70 bar herrscht, wobei man die Polymerisation in Anwesenheit eines Katalysators und gegebenenfalls eines Molekulargewichtsreglers in der Gasphase in einem durchmischten Schüttbett aus kleinteiligem Polymerisat unter Abfuhr der Polymerisationswärme durch Kühlung des Ethylenkreisgases ausführt, und Austragen des Polymerisats aus dem Polymerisationssystem.

Bei derartigen Verfahren können Homo- und Copolymerisate des Ethylens mit Dichten zwischen 0,915 und 0,965 g/cm³ erhalten werden, wobei durch den Wegfall von Löse-bzw. Suspensionsmittel oder hohem Druck die Gewinnung der Polymerisate stark vereinfacht ist.

Verfahren zur Herstellung von Ethylenpolymerisaten in der Gasphase in einem durchmischten Schüttbett aus kleinteiligem Polymerisat unter Abfuhr der Polymerisationswärme durch Kühlung des im Kreislauf geführten Ethylens sind aus der Literatur bekannt (vgl. Ullmnns Encyclopädie der technischen Chemie 4, [1980], [19], Seite 186, Verlag Chemie GmbH, D-6940 Weinheim, die US-Patente 4 012 573, 4 427 573, 4 376 191 und 4 467 080 sowie die EP-Patentanmeldungen A1-0 110 087, A2-0 050 013, A1-0 050 477 und A2-0 059 080).

Nach den bekannten Verfahren werden Ziegler- oder Phillipskatalysatoren und Wasserstoff als Molekulargewichtsregler eingesetzt. Der Reaktor kann z.B. aus der Gaseintrittszone, einem zylindrischen Reaktionsteil und einer Beruhigungszone, in der die Polymerisatteilchen von nicht umgesetztem Gas getrennt werden, bestehen. Der Durchmesser eines solchen bekannten Reaktors liegt in der Polymerisationszone bei 4,5 m (vgl. "Chemical Engineering" 80, [1973], [27], Seiten 72 bis 73).

Wichtig ist jedoch bei diesem Polyethylenherstellprozeß, der nahe der Sintertemperatur des Polyethylens verläuft, unter konstanten Reaktionsbedingungen und konstanten Mischbedingungen zu arbeiten. Es hat sich trotz der Fülle gradueller Verbesserungen immer wieder als nachteilig erwiesen, daß es zu Produktabscheidungen an den Reaktorwänden und -einbauten und zur Bildung von Polymerbrocken kommt. Damit können keine konstanten Reaktionsbedingungen mehr eingehalten werden.

Schwankende Produktqualität und kurze Reaktorlaufzeiten mit anschließend aufwendiger Reaktorreinigung sind die Folge.

Aus der Literatur ist es bereits bekannt, zur Vermeidung von Belagbildung bei der Polymerisation von Olefinen in der flüssigen Phase bzw. bei flüssigkeitsähnlichen Dichten und Lösungseigenschaften überkritischen Ethylens sowie bei der Suspensionspolymerisation des Ethylens dem Polymerisationssystem ein Antistatikum zuzusetzen (vgl.EP-A1-107 127, US-Patent 4 220 580 sowie Chemical Abstracts 83, [1975], 116 444 und 94, [1981], 16340). Bei diesen bekannten Verfahren können Ladungen, die sich auf den suspendierten Polymer-oder Katalysatorkörnern gebildet haben, zur Wand abfließen bzw. es können bei der Hochdruckpolymerisation die Reaktion kontrolliert und die Eigenschaften des Hochdruckpolyethylens verbessert werden.

Aufgabe der vorliegenden Erfindung war es, die Ausbildung von Polymerbrocken, Reaktorbelägen und die Belagbildung an den Einbauten bei der Gasphasenpolymerisation des Ethylens zu verhindern. Eine zweite Aufgabe bestand darin, eine einwandfreie Durchströmung des durchmischten Schüttbettes aus kleinteiligem Polymerisat mit Reaktions-und Kreisgas zu gewährleisten. Eine dritte Aufgabe bestand darin, die Produktqualität des Ethylenpolymerisats zu verbessern.

Diese Aufgaben wurden durch ein Verfahren gemäß Patentansprüche 1 bis 3 gelöst.

Unter Ethylenpolymerisaten werden Polyethylen sowie die mit Ethylen unter den angegebenen Bedingungen herstellbaren Copolymerisate des Ethylens mit α-Monoolefinen verstanden. Als Comonomere zum Ethylen kommen insbesondere n-Buten-1, n-Hexen-1, 4-Methylpenten-1 oder Propen in Betracht. Die erhaltenen Ethylenpolymerisate weisen Dichten zwischen 0,915 und 0,965 g/cm³, gemessen nach DIN 53479, auf. Die Ethylenpolymerisate fallen in kleinteiliger Form als feiner oder grober Grieß an, wobei der Teilchendurchmesser im allgemeinen im Bereich von etwa 0,03 bis 10, insbesondere etwa 0,1 bis 5mm liegt.

Bei der Polymerisation werden die Monomeren gemäß den eingangs zitierten Literaturstellen in ein Polymerisationssystem, in dem eine Temperatur von 60 bis 125, bevorzugt 80 bis 110°C und ein Druck von 5 bis 70, bevorzugt 20 bis 50 bar herrscht, kontinuierlich eingeführt (vgl.insbesondere EP-A1-0 110 087, US-A-4 427 573, US-A-4 376 191 u.a.).

Die Polymerisation selbst erfolgt mittels eines Übergangsmetallkatalysators in üblichen Mengen. Dieser kann ein Zieglerkatalysator und insbesondere ein Zieglerkatalysator aus einer Titan enthaltenden sowie einer Aluminium enthaltenden Katalysatorkomponente sein. Solche Katalysatorsysteme sind dem Fachmann aus der Literatur und Praxis derartig geläufig, daß sich an dieser Stelle eine nähere Erläuterung erübrigt. Es sei hierzu lediglich auf die Druckschriften EP-A1-0 110 087 und US-A-4 110 523 bzw. 4 113 933 verwiesen. Geeignete Katalysatoren sind aber auch Phillipskatalysatorsysteme; als Katalysator wird z.B. Triphenylsilylchromat auf Kieselsäure, die mit Polyisobutylaluminiumoxid bzw. Dialkylzink getränkt ist, verwendet (vgl. US-A-4 003 712 und 4 376 191). Derartige Katalysatoren und deren Verwendung bei der Polymerisation von Ethylen in der Gasphase sind so bekannt, daß hier nicht mehr auf die Einzelheiten eingegangen werden muß. Die Katalysatoren werden üblicherweise in Mengen von 0,002 bis 0,05 Gew.-%, bezogen auf das Monomer, angewendet.

Was für das Katalysatorsystem zu sagen war, gilt sinngemäß auch für gegebenenfalls zusätzlich mit einzusetzenden Molekulargewichtsreglern, wie insbesondere Wasserstoff.

Die Ethylenhomo- oder -copolymerisation soll nach bekannten Verfahren in der Gasphase in einem durchmischten Schüttbett aus kleinteiligem Polymerisat durchgeführt werden. Polymerisation in der Gasphase bedeutet dabei, daß weder ein Lösungs-oder Suspendiermittel für Monomere oder Polymere in der Polymerisationszone vorhanden ist, noch, daß ein überkritisches Ethylen mit flüssigkeitsähnlichen Dichten und Lösungseigenschaften vorliegt. Unter einem durchmischten Schüttbett wird sowohl ein gerührtes Schüttbett als auch ein Wirbelschichtbett verstanden. Das Verfahren in einem gerührten Schüttbett basiert im wesentlichen auf der aus den US-Patenten 3 254 070 und 3 350 376 sowie dem britischen Patent 1 552 438 bekannten Verfahrensart. Ein besonders bevorzugtes Verfahren ist in der EP-A1-0 110 087 beschrieben, bei dem die Polymerisationswärme durch Joule-Thomson-Kühlung abgeführt wird, indem man ein gegenüber dem Polymerisationsdruck komprimiertes und gegenüber der Polymerisationstemperatur kälteres Monomerengemisch in überschüssiger Menge in die Polymerisationszone entspannt, derart, daß dort durch die dabei entstehende Joule-Thomson-Kälte die gewünschte Polymerisationstemperatur aufrechterhalten bleibt und die gasförmige, nicht durch Polymerisation verbrauchte Menge des Monomerengemisches aus der Polymerisationszone abgezogen und nach Komprimierung sowie Kühlung im Kreislauf wieder der Polymerisationszone zugeführt wird. Das Verfahren in einem durchgewirbelten Schüttbett, das sogenanntge Wirbelschichtverfahren, ist ebenfalls so bekannt, daß es hierzu keiner besonderen Erläuterung bedarf (vgl. EP-B1-0 004 966 und EP-A1-0 089 691).

Die Abführung der Polymerisationswärme erfolgt durch Kühlung des Monomerkreisgases. Diese Kühlung kann durch übliche Wärmeaustauscher (vgl. z.B. US-A-4 012 573) oder durch Entspannungskühlung (vgl. EP-A1-0 110 087) erfolgen.

Das Austragen des Polymerisats aus der Polymerisationszone erfolgt üblicherweise durch Entspannungsventile, die periodisch geöffnet werden.

Nach erfindungsgemäßem Verfahren soll in Gegenwart von 0,0002 bis 0,01 Gew.-% (= 2 bis 100 Gew.ppm), bevorzugt 0,0005 bis 0,004 Gew.-% (= 5 bis 40 Gew.ppm), bezogen auf die gewonnene und ausgetragene Ethylenpolymerisatmenge, eines Antistatikums polymerisiert werden.

Antistatika sind Zusätze unterschiedlicher Zusammensetzung, welche die elektrostatische Aufladung verhindern. Geeignete Antistatika sind beispielsweise $C_{12}$-bis $C_{22}$-Fettsäureseifen von Alkali-oder Erdalkalimetallen, Salze von Sulfonsäureestern mit der allgemeinen Formel $(RR')CHOSO_3Me$, Ester von Polyethylenglykolen mit Fettsäuren, Polyoxyethylenalkylether ect. Eine Übersicht über Antistatika für Ethylenpolymerisate, die auch für das erfindungsgemäße Verfahren geeignet sind, findet man in den Publikationen von G.Balbach in "Kunststoffe" 67, (1977), Seiten 154 bis 159 und von der Fa. Sumitomo Chemical Co. in der EP-A1-0 107 127, Seiten 6 bis 10.

Besonders geeignet als antistatisch wirkende Substanz ist ein Produkt mit dem Handelsnamen KE-ROSTAT CE 5009®, das aus einer Mischung aus Chrom-oleoyl-anthranilat, Calcium-medialant und Di-tertiärbutylphenol besteht.

Das Antistatikum wird in Lösung, insbesondere in 1 bis 15 gew.%iger Lösung in Paraffinöl zudosiert, wobei das Paraffinöl möglichst rein sein soll. Bei dieser Zugabe wird nach bevorzugter Verfahrensweise unter Stickstoffdurchperlung die Lösung sauerstofffrei gehalten und diese Lösung dem Polymerisationssystem zugegeben.

Nach besonders bevorzugter Arbeitsweise wird zur Herstellung der zu dosierenden antistatisch wirkenden Lösung das Antistatikum KEROSTAT CE 5009® in einer Dosiervorlage im Gewichtsverhältnis 1 : 10 in Paraffinöl, z.B. ONDINA 15®, gelöst und zur Mischung unter Sauerstofffreiheit kontinuierlich mit Stickstoff durchströmt. Die Zugabe dieser Lösung zum Reaktor erfolgt beginnend mit mindestens einer Stunde vor Dosierbeginn des Katalysators. Während dieser Startphase befindet sich die Anlage auf Kreisfahrweise, d.h. der Reaktor steht druck-, temperatur- und konzentrationsseits unter Reaktionsbedingungen und wird von Kreisgas = Reaktionsgas durchströmt.

Nach Katalysatorzugabe und Reaktionsbeginn ist die Dosierrate auf tunlichst 10 Gew.ppm Antistatikum, bezogen auf die produzierte Polyethylenmenge, einzustellen. Höhere Konzentrationen haben lediglich den Vorteil, daß sie bei Dosierausfall wegen der Überschußsituation den Grenzbereich zur Belagbildung vermeiden helfen.

Die mit der Erfindung erzielten Vorteile sind insbesondere darin zu sehen, daß die Bildung von anhaftenden und/oder abgelösten mehr oder weniger großen Polymerbelägen bzw. Polymerbrocken vermieden wird. Infolge des Wegfalls dieser Produktablagerungen sind die Reaktorbedingungen konstant einstellbar und reproduzierbar, die zu erreichenden Reaktorlaufzeiten liegen deutlich höher und es ist eine gleichmäßig gute Produktqualität des zu produzierenden Ethylenpolymerisats gegeben.

Beispiel

In einem 15 m³-Reaktor, in dem sich zur Durchmischung des Reaktorinhaltes ein mit 45 Umdrehungen/Minute laufender Rührer befindet, wird ein Gemisch aus Ethylen und 5 Gew.-% Buten kontinuierlich bei 45 bar Reaktordruck polymerisiert. Die Reaktionstemperatur beträgt 102°C. Sie wird dadurch aufrechterhalten, daß nichtumgesetztes heißes Ethylen aus dem Reaktor abgeführt, abgekühlt, komprimiert und nach Entspannung auf Reaktordruck kalt wieder in die Reaktionszone eingeführt wird. Als Katalysator wird ein üblicher Phillipskatalysator verwendet, bei dem Chromsalz auf ein Kieselträger aufgezogen ist. Es wird in einer Menge von 40 g/h in den Reaktor dosiert. Die stündlich dem Reaktor zugeführte Monomerenmenge beträgt 950 kg Ethylen und 50 kg Buten. Aus dem Reaktor werden stündlich 1.000 kg eines Ethylencopolymeren ausgetragen. Zur Regelung des mittleren Molekulargewichts werden dem Reaktor 30 Nm³ Wasserstoff pro Stunde zugefahren.

In den Reaktor werden 2 Stunden vor Reaktionsstart stündlich 100 ml einer 10 gew.-%igen Lösung von Kerostat CE 5000® in Ondina 15® dosiert. Nach Beginn der Reaktion wird die Dosiermenge auf 200 ml/h erhöht. Die Reaktionstemperatur im Reaktor läßt sich auf diese Weise sehr konstant auf 102 ± 0,2°C einstellen. Demzufolge zeigen auch die Polymereigenschaften nur geringe Schwankungen. Der Meltindex des Produktes (gemessen nach ASTM D 1238; Condition E) liegt bei 20 ± 3 g/10 min, die Polymerdichte bei 0,936 ± 0,002 g/cm³. Aus dem Produkt hergestellte Folien weisen nur sehr wenig Stippen auf. Bei der Reaktion werden keine den Reaktorlauf störende Polymerbrocken gebildet.

Vergleichsbeispiel

Es wird verfahren wie in Beispiel 1, nur wird weder vor noch während der Polymerisation Antistatikum dosiert. Die angestrebte Reaktionstemperatur von 102°C weist in diesem Fall größere Schwankungen von bis zu ± 3°C auf. Aus dem Reaktor werden in zunehmendem Umfang zusammengesinterte Polymerbröckchen ausgetragen. Auch die Polymereigenschaften sind wegen der Temperaturschwankungen weniger einheitlich. Der Meltindex liegt bei 20 ± 5 g/10 min, die Dichte bei 0,937 ± 0,005 g/cm³. Die aus dem Produkt hergestellten Folien weisen viele kleine, harte Stippen auf. Nach ca. 10 Tagen mußte der Reaktor wegen eines am Rührer anhaftenden größeren Brockens abgestellt werden.

**Patentansprüche**

1. Verfahren zur Herstellung von Ethylenpolymerisaten, ausgenommen ultrahochmolekularen Ethylenpolymerisaten mit Molekuargewichten größer als 2-10⁶, durch Homopolymerisationn von Ethylen oder Copolymerisation von Ethylen mit Ethylen copolymerisierbaren Verbindungen durch kontinuierliches Einführen der Monomeren in ein Polymerisationssystem, in dem eine Temperatur zwischen 60 und 125°C und ein Druck zwischen 5 und 70 bar herrscht, wobei man die Polymerisation in Anwesenheit eines Katalysators und gegebenfalls eine Molekulargewichtreglers in der Gasphase in einem durchmischten Schüttbett aus kleinteiligem Polymerisat unter Abfuhr der Polymerisationswärme durch Kühlung des Ethylenkreisgases ausführt, und Austragen der Polymerisats aus dem Polymerisationssystem, dadurch gekennzeichnet, daß in Gegenwart von 0,0002 bis 0,01 Gew.-%, bezogen auf die Ethylenpolymerisatmenge, eines Antistatikums polymerisiert wird, wobei das Antistatikum in Form einer Lösung kontinuierlich dem Polymerisationssystem während der Polymerisation zugesetzt wird.

2. Verfahren nach Anspruch 1, dadurch gekennzeichnet, daß in Gegenwart von 0,0005 bis 0,004 Gew.-% Antistatikum polymerisiert wird.

3. Verfahren nach Anspruch 1, dadurch gekennzeichnet, daß das Antistatikum in Form einer 1 bis 15 gew.-%igen Lösung in Paraffinöl zugegeben wird.

**Claims**

1. A process for the preparation of an ethylene polymer but not an ultrahigh molecular weight ethylene polymer having a molecular weight greater than 2-10⁶, by homopolymerization of ethylene or copolymerization of ethylene with a compound which is copolymerizable with it, by continuously introducing the monomer(s) into a polymerization system which is at from 60 to 125°C and under from 5 to 70 bar, the polymerization being carried out in the presence of a catalyst and, if required, a molecular weight regulator, in the gas phase, in an agitated bed of finely divided polymer, with removal of the heat of polymerization by cooling the circulated ethylene gas, and discharging the polymer from the polymerization system, wherein polymerization is carried out in the presence of from 0,0002 to 0,01% by weight, based on the amount of ethylene polymer, of an antistatic agent, the antistatic agent being added continuously to the polymerisation system during the polymerization in the form of a solution.

2. A process as claimed in claim 1, wherein the polymerization is carried out in the presence of from 0,0005 to 0,004% by weight of an antistatic agent.

3. A process as claimed in claim 1, wherein the antistatic agent is added in the form of a 1-15% strength by weight solution in liquid paraffin.

**Revendications**

1. Procédé d'obtention de polymères d'éthylène, à l'exception de polymères d'éthylène de très haut poids moléculaire, supérieur à 2-10⁶, par homopolymérisation d'éthylène ou copolymérisation de l'éthylène avec des composés copolymérisables avec l'éthylène par introduction en continu de monomères dans un système de polymérisation dans lequel règne une température comprise entre 60 et 125°C et une pression comprise entre 5 et 70 bars, procédé dans lequel on effectue la polymérisation en phase gazeuse en présence d'un catalyseur et éventuellement d'un agent de régulation du poids moléculaire, dans un lit agité et malaxé de polymère finement divisé, la chaleur de polymérisation étant éliminée par le refroidissement du gaz éthylène recyclé et l'enlèvement du polymère du système de polymérisation, caractérisé en ce qu'on effectue la polymérisation en présence de 0,0002 à 0,01% en poids, rapporté à la quantité de polymère d'éthylène d'un agent antistatique, ledit agent antistatique étant ajouté en continu au système de polymérisation en cours de polymérisation sous la forme d'une solution.

2. Procédé selon la revendication 1, caractérisé en ce qu'on effectue la polymérisation en présence de 0,0005 à 0,004% en poids d'agent antistatique.

3. Procédé selon la revendication 1, caractérisé en ce qu'on ajoute l'agent antistatique sous la forme d'une solution de 1 à 15% en poids dans de l'huile de paraffine.